# EUROPÄISCHE PATENTSCHRIFT

(11) **EP 2 224 204 B1**
(45) Veröffentlichungstag und Bekanntmachung des Hinweises auf die Patenterteilung: **26.05.2021**
(21) Anmeldenummer: 10165895.3
(22) Anmeldetag: 16.12.2005
(51) Int. Cl.: G01B 21/04, G01B 15/00, G01B 11/03

(54) **Verfahren zum Messen von Werkstückgeometrien mit einem Koordinatenmessgerät**
Method for measuring object geometries with a coordinate measuring device
Procédé de mesure de la géometrie d'un objet à l'aide d'un appareil de mesure de coordonnées

(30) Priorität: 16.12.2004 DE 102004061151
(43) Veröffentlichungstag der Anmeldung: 01.09.2010
(62) Teilanmeldung aus: 05819689.0
(73) Patentinhaber: Werth Messtechnik GmbH, 35394 Giessen (DE)
(72) Erfinder: Christoph, Ralf, 35394 Giessen (DE); Rauh, Wolfgang, 35094 Lahntal (DE); Andräs, Matthias, 61197 Florstadt (DE); Wachter, Uwe, 88094 Oberteuringen (DE)
(74) Vertreter: Stoffregen, Hans-Herbert

(56) Entgegenhaltungen:
- WO-A1-02/084215
- JP-A- 58 122 414
- US-A- 4 912 328

## Beschreibung

Die Erfindung bezieht sich auf ein Verfahren zum Messen von Werkstückgeometrien mit einem Koordinatenmessgerät mit beweglichen Verfahrachsen und zumindest einem Bildverarbeitungssensor oder einem Röntgensensor zur Erfassung von Messpunkten auf den Werkstückoberflächen, wobei jeweils derjenige Sensor entsprechend der zu lösenden Messaufgabe zum Messen der Werkstückgeometrien ausgewählt wird.

Unter Koordinatenmessgeräten werden Messgeräte mit einer oder mehreren mechanisch bewegten Achsen zur Messung von geometrischen Eigenschaften von Werkstücken bzw. Messobjekten verstanden. Diese Koordinatenmessgeräte sind mit Sensoren zur Aufnahme der geometrischen Messpunkte an den Werkstückoberflächen ausgestattet. Stand der Technik sind überwiegend Koordinatenmessgeräte mit rein taktilen Sensoren, d. h. der Messpunkt wird durch Berührung der Werkstückoberfläche mit einem taktilen Fühler erzeugt. Ebenfalls bekannt sind Koordinatenmessgeräte mit optischen Sensoren, bei denen die Messpunkte durch eine opto-elektronische Bildverarbeitung oder einen Laserabstandssensor ermittelt werden. Es sind ebenfalls Koordinatenmessgeräte bekannt, bei denen einzelne dieser Sensoren miteinander kombiniert und so erweiterte Möglichkeiten für den Anwender gegeben sind.

Ein Überblick über die Koordinatenmesstechnik ergibt sich aus den Literaturstellen DE.Z.: Die Bibliothek der Technik, Koordinatenmesstechnik im industriellen Einsatz, Verlag Moderne Industrie, Band 203 (ISBN 3-478-93212-2) sowie DE.Z.: Die Bibliothek der Technik, Multisensor Koordinatenmesstechnik, Verlag Moderne Industrie, Band 248 (ISBN 3-478-93290-4).

Immer wieder ist es festzustellen, dass das zum Einsatz gelangende Koordinatenmessgerät für die jeweilige Messaufgabe nicht optimal konfiguriert ist, so dass folglich mehrere Geräte verschiedener Bauarten notwendig sind.

Der WO 02/084215 A1 ist ein Verfahren zur automatischen Regelung von Fokus und Beleuchtung sowie zur objektivierten Antastung des Kantenortes in der optischen Präzisionsmesstechnik zu entnehmen. Dabei besteht die Möglichkeit, ein Bild mittels einer Video-Kamera bei unterschiedlich eingestellten Beleuchtungsstärken aufzunehmen.

Aus der JP 58122414 A wird das Messen eines Substrates durch Scannen beschrieben. Der US 4 912 328 ist ein scannendes Elektronenmikroskop zu entnehmen, mit dem ein verbessertes Signalrauschverhältnis erzielbar ist.

Der vorliegenden Erfindung liegt das Problem zugrunde, ein Verfahren zum Messen von Werkstückgeometrien mit einem Koordinatenmessgerät derart weiterzubilden, dass Einzelmessergebnisse derart verarbeitet werden, dass eine präzise Messung der Werkstückgeometrien möglich wird.

Zur Lösung der Aufgabe sieht die Erfindung ein Verfahren gemäß Anspruch 1 vor.

Zur Verbesserung des Signalrauschverhältnisses von Bildverarbeitungssensoren oder Röntgensensoren kann die Integrationszeit so lange verlängert werden, bis ein ausreichend hohes Signalrauschverhältnis vorliegt. Dies bedeutet, dass mehrere aufeinander folgende Bilder addiert werden und dann an diesem aufaddierten Bild die Bildauswertung erfolgt. Dieser Vorgang kann automatisch geregelt werden, in dem die Integrationszeit einer solchen Kamera so lange verlängert wird, bis ein ausreichend gutes Bild gespeichert und weiter verarbeitet werden kann. Die Intensität der Bildpunkte des Bildes wird hierbei bis zu einem Sollwert überwacht und durch Aufspeichern mehrerer Bilder vergrößert.

Beim Messen mit Bildverarbeitungssensoren in Koordinatenmessgeräten werden verschiedene Beleuchtungsquellen, wie Hellfeld, Dunkelfeld, Durchlicht, eingesetzt, um jeweils optimale Kontrastverhältnisse für Teilbereiche eines zu messenden Werkstückes zu erreichen. Diese Beleuchtungsquellen werden hinsichtlich ihrer Einstellung, wie Intensität, Raumwinkel der Beleuchtung (Beleuchtungswinkel oder Richtung der Beleuchtung), Beleuchtungsrichtung variiert, um optimale Verhältnisse zu erreichen. Diese Parameter sind für Teilbereiche des zu messenden Objektes jeweils unterschiedlich, weshalb es nicht möglich ist, mit einer Beleuchtungseinstellung das gesamte Objekt optimal abzubilden. Um diesen Nachteil zu vermeiden, wird vorgeschlagen, dass zur Erzeugung eines optimalen kontrastierten Bildes nacheinander mehrere Bilder mit verschiedenen Beleuchtungsquellen aufgenommen und aus jedem Bild jeweils die Bereiche mit optimalem Kontrast entnommen und zu einem geometrisch richtigen Gesamtbild zusammengefügt werden.

Es ist vorgesehen, dass zur Erzeugung eines optimalen Kontrasts für den Bildverarbeitungssensor nacheinander mehrere Bilder mit verschiedenen Beleuchtungsquellen aufgenommen, aus jedem Bild die Bereiche mit optimalem Kontrast entnommen und zu einem kontrastoptimierten Gesamtbild zusammengefügt werden.

Im Detail ist es somit möglich, dass verschiedene Bilder des gleichen Objektes bzw. Objektausschnittes durch Verwendung verschiedener Beleuchtungsrichtungen einer Dunkelfeldbeleuchtung und/oder verschiedener Beleuchtungswinkel einer Dunkelfeldbeleuchtung und/oder Einsatz einer Hellfeldbeleuchtung aufgenommen und die kontrastoptimalen Bereiche des Einzelbildes zu einem optimierten Gesamtbild zusammengefügt werden. Dieses kann dann anschließend messtechnisch ausgewertet werden. Die beschriebene Vorgehensweise kann ebenfalls auf jedes einzelne Pixel des Bildverarbeitungssensors angewendet werden, d. h. dass für jedes Pixel des resultierenden Gesamtbildes das Pixel mit optimalem Kontrast aus der Anzahl von Einzelbildern heraus gewählt wird. Der Kontrast eines Einzelpixels wird durch die Amplitudendifferenz dieses Pixels zu seinen Nachbarn im Bild bestimmt.

Es ist vorgesehen, dass für jedes Pixel des resultierenden Gesamtbildes bzw. für jeden Ort jedes resultierenden Pixels des Gesamtbildes dasjenige Pixel mit gleichem Ort aus den mit verschiedener Beleuchtung generierten Einzelbildern ausgewählt wird, welches optimalen Kontrast in seiner Umgebung aufweist, wobei die Bewertung des optimalen Kontrasts durch Bestimmung der Amplituden-Differenz zwischen den jeweils betrachteten Pixeln und den benachbarten Pixeln durchgeführt wird.

Beim Einsatz von Bildverarbeitungssensoren oder Röntgentomographiesensoren tritt das Problem auf, dass je nach Eigenschaften des Messobjektes innerhalb eines Bildes sowohl Bereiche mit starken als auch mit schwachen Intensitäten vorliegen. Dies wird durch die unterschiedlichen Reflexions- bzw. Transmissionseigenschaften der Materialien verursacht. Im Ergebnis sind für die "dunklen" Bildbereiche nur geringe Signale vorhanden mit daraus folgendem schlechten Signal/Rausch-Verhältnis. Eine stärkere Beleuchtung bzw. Bestrahlung des Objektes würde jedoch zum Überstrahlen in den hellen Bereichen führen und schließt sich somit aus.

Das beschriebene Problem wird dadurch gelöst, dass zu jedem Bildausschnitt mehrere Bilder mit unterschiedlichen Beleuchtungsintensitäten aufgenommen werden. Anschließend werden diese Bilder des gleichen Objektbereiches in der Weise zu einem neuen Gesamtbild zusammengefügt, dass die Bildpunktamplituden auf die jeweilige Beleuchtungs- bzw. Strahlungsintensität, die verwendet wurde, normiert werden. Zur Gesamtbildzusammensetzung werden anschließend die Pixel aus dem jeweiligen Bild verwendet, die innerhalb des zugelassenen Dynamikbereiches (z. B. 0 - 245 bei 8 Bit) liegen. Amplituden mit Überstrahlung werden aus dem jeweiligen Bild nicht berücksichtigt (z. B. > 245). Für Pixel mit mehreren gültigen Bildpunktamplituden erfolgt eine Mittelung aus den Werten. Anschließend kann das Gesamtbild ausgewertet werden.

Sowohl bei Einsatz von Bildverarbeitungssensoren als auch in Röntgentomographie-Anwendungen reicht oft die Strahlungsintensität bzw. Durchstrahlungsintensität des Messobjekts nicht aus, um eine optimale Messung zu ermöglichen. Dies wird dadurch verbessert, dass zur Qualitätsoptimierung von aufgenommenen Bildern bei Bildverarbeitungssensoren bzw. Röntgentomographiesensoren mehrere Bilder eines Objektbereiches mit jeweils unterschiedlichen Beleuchtungs- bzw. Strahlungsintensitäten aufgenommen und diese dann zu einem Gesamtbild zusammengefügt werden. Es werden zum Beispiel aus jedem Einzelbild einer mit jeweils unterschiedlicher Beleuchtungs- bzw. Strahlungsintensität aufgenommenen Einzelbilderschar die Bildpunktamplituden (Pixel) herangezogen, die innerhalb eines als gültig definierten Amplitudenbereiches (typisch zwischen 0 und 245 LSB) liegen. Bildpunktamplituden mit Amplitudenwertung, die auf Überstrahlung schließen lassen (z. B. > 245 LSB) bleiben bei der Auswertung unberücksichtigt. Liegen aus mehreren Bildern gültige Bildpunktamplituden zu einem Bildpunkt vor, kann aus den normierten Bildpunktamplituden ein Mittelwert gebildet werden. Es ist möglich, alle beschriebenen Berechnungen auf die benutzte Strahlungs- bzw. Beleuchtungsintensität normierten Amplitudenwerte durchzuführen.

Weitere Einzelheiten, Vorteile und Merkmale der Erfindung ergeben sich nicht nur aus den Ansprüchen, den diesen zu entnehmenden Merkmalen für sich und/oder in Kombination, sondern auch aus der nachfolgenden Beschreibung von der Zeichnung zu entnehmenden bevorzugten Ausführungsbeispielen.

Es zeigen:
- Fig. 1: eine Prinzipdarstellung eines Koordinatenmessgerätes,
- Fig. 2: einen Ausschnitt eines Koordinatenmessgerätes in Prinzipdarstellung,
- Fig. 3: eine Prinzipdarstellung eines Koordinatenmessgerätes mit Bildverarbeitungs- und Laserabstandssensor,
- Fig. 4: eine Prinzipdarstellung eines Messverfahrens,
- Fig. 5: eine weitere Prinzipdarstellung eines Messverfahrens,
- Fig. 6: eine Prinzipdarstellung einer Konturverfolgung,
- Fig. 7: Lichtintensitätskurven,
- Fig. 8: eine Soll- und eine Ist-Lichtintensitätskurve,
- Fig. 9: Soll- und Ist-Vergleich von Konturdaten,
- Fig. 10a, 10b: Soll- und Ist-Konturen,
- Fig. 11, 12: ein Messobjekt mit Toleranzzonen,
- Fig. 13: eine Anordnung zum Messen teiltransparenter Schichten,
- Fig. 14: eine Messanordnung zum Messen eines Höhenprofils,
- Fig. 15: eine Messanordnung zum Messen eines Messobjektes in unterschiedlichen Stellungen,
- Fig. 16: eine Anordnung zur Bestimmung der Lage eines Antastformelementes,
- Fig. 17: eine Anordnung mit zwei miteinander verbundenen Sensoren,
- Fig. 18: eine Einspannanordnung für ein Messobjekt,
- Fig. 19: einen Sensorrechen zur Messung mehrerer Messbahnen,
- Fig. 20: eine Anordnung zur Messung eines Werkzeuges,
- Fig. 21: eine Messanordnung mit Bildverarbeitungssensor und Laserabstandssensor,
- Fig. 22: ein Prinzipbild zur Messung von durch Extrapolation ermittelten Messpunkten und
- Fig. 23: eine Prinzipdarstellung einer Anordnung mit einem Röntgentomographiesensor .

Die Erfindung bzw. Erfindungskomplexe werden nachstehend an bevorzugten Ausführungsbeispielen näher erläutert.

Die entsprechenden Ausführungen erfolgen dabei vor dem Hintergrund, dass Kenntnisse der Koordinatenmesstechnik präsent sind. Ergänzend wird insoweit auf die Literaturstellen DE.Z.: Die Bibliothek der Technik, Koordinatenmesstechnik im industriellen Einsatz, Verlag Moderne Industrie, Band 203 (ISBN 3-478-93212-2) sowie DE.Z.: Die Bibliothek der Technik, Multisensor Koordinatenmesstechnik, Verlag Moderne Industrie, Band 248 (ISBN 3-478-93290-4) verwiesen, auf die ausdrücklich Bezug genommen wird und deren Inhalte zum Offenbarungsgehalt der Beschreibung gehört.

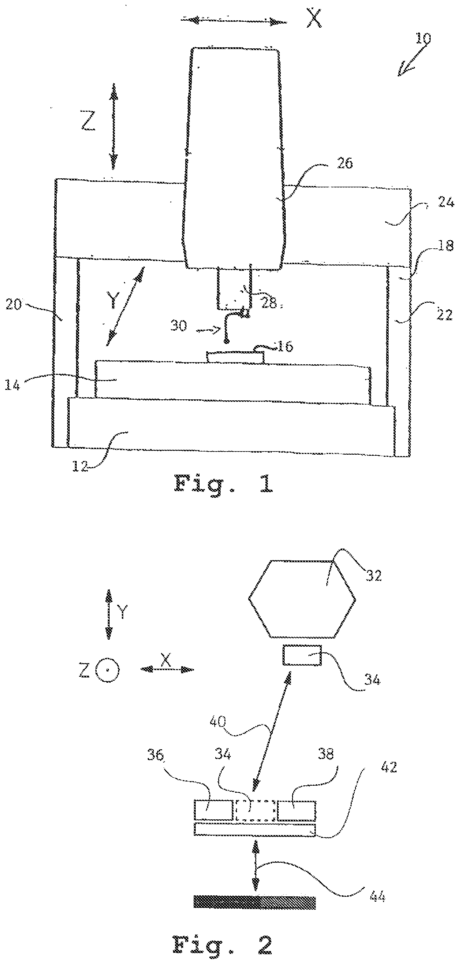

In Fig. 1 ist rein prinzipiell ein Koordinatenmessgerät 10 dargestellt, das mit dem für die jeweilige Lösung einer Messaufgabe erforderlichen Sensor bzw. den erforderlichen Sensoren ausgestattet ist. Die Sensoren können wahlweise montiert oder demontiert werden oder über entsprechende Sensorwechselsysteme auch während des Betriebes automatisch ein- und ausgewechselt werden. Hierdurch ist ein flexibles Messen komplexer Werkstückgeometrien möglich. Selbstverständlich wird die Erfindung nicht verlassen, wenn eine entsprechende Anzahl von ausgewählten Sensoren fest auf dem Gerät montiert gelassen wird, um in dieser Konfiguration Objekte zu messen.

Das hinlänglich bekannte und noch einmal in der Fig. 1 wiedergegebene Prinzip eines Koordinatenmessgerätes 10 umfasst einen z. B. aus Granit bestehenden Grundrahmen 12 mit Messtisch 14, auf dem ein zu messendes Objekt 16 positioniert wird, um dessen Oberflächeneigenschaften zu messen.

Entlang dem Grundrahmen 12 ist ein Portal 18 in Y-Richtung verstellbar. Hierzu sind Säulen oder Ständer 20, 22 gleitend am Grundrahmen 12 abgestützt. Von den Säulen 20, 22 geht eine Traverse 24 aus, entlang der ein Schlitten verfahrbar ist, der seinerseits eine Pinole oder Säule 26 aufnimmt, die in Z-Richtung verstellbar ist. Von der Pinole 26 bzw. ggfs. einer mit der Pinole 26 verbundenen Wechselschnittstelle 28 geht ein Sensor 30 aus, der im Ausführungsbeispiel als taktiler Sensor ausgebildet ist, der dann, wenn die Pinole 26 einen Bildverarbeitungssensor enthält, taktil-optisch misst. Insoweit wird jedoch auf hinlänglich bekannte Techniken verwiesen, genauso wie in Bezug auf weitere zum Einsatz gelangende Sensoren wie Laserabstandssensor, Weißlichtinterferometer, Bildverarbeitungssensoren, Röntgensensorik oder chromatischer Fokussensor oder konfokal Scanning-Messkopf, ohne dass hierdurch eine Einschränkung der erfindungsgemäßen Lehre erfolgt. Der bzw. die Sensoren werden entsprechend der Messaufgabe ausgewählt und eingesetzt, um das Koordinatenmessgerät 10 für die jeweilige Messaufgabe optimal zu konfigurieren. Gleichzeitig werden Probleme gelöst, die bei üblichen Koordinatenmessgeräten auftreten.

Um das Koordinatenmessgerät 10 mit dem geeigneten Sensor nutzen zu können, kann das Koordinatenmessgerät einen Sensorwechsler aufweisen, wie dies prinzipiell der Fig. 2 zu entnehmen ist. So können mehrere Sensoren jeweils wahlweise über eine Wechselschnittstelle mit dem Koordinatenmessgerät versehen und von Hand oder durch automatisches Abholen des Koordinatenmessgerätes an einer Parkstation ausgewechselt werden.

In Fig. 2 ist ein Ausschnitt eines Koordinatenmessgerätes mit einer Pinole 32 in Draufsicht wiedergegeben. Die mit der Pinole verbindbaren Sensoren sind mit den Bezugszeichen 34, 36, 38 gekennzeichnet. Dabei können die Sensoren 34, 36, 38 optisch oder taktil ausgeführt sein, um nur beispielhaft Sensorarten zu nennen. Das Koordinatenmessgerät, d. h. die Pinole 32 ist in Y-X-Z-Richtung derart verstellbar, um einen Austausch der Sensoren 34, 36, 38 vorzunehmen. Im Ausführungsbeispiel positioniert die Pinole 32 und somit das Koordinatenmessgerät auf einem Positionierweg 40 den Sensor 34 in einer Parkstation 42 und ist sodann in der Lage, einen der in der Parkstation 42 abgelegten Sensoren 36, 38 aufzunehmen und wieder an der Pinole 32 anzubringen. Die Parkstation 42 bzw. das Tasterwechslersystem kann durch eine Verstellachse 44 so verstellt werden, dass der Tasterwechsler 42 bei Nichtbetrieb außerhalb des Messvolumens des Koordinatenmessgerätes angeordnet ist.

Bei Anwendung von Bildverarbeitungssensoren in Koordinatenmessgeräten ist es für den Anwender erforderlich, verschiedene Vergrößerungen einzustellen. Dem widerspricht die Forderung nach kostenoptimierten optischen Systemen sowie hohen Abbildungsgüten, die mit den sonst erforderlichen Zoom-Optiken nur schwer zu erreichen sind. Um diesen Forderungen zu genügen ist vorgesehen, dass die Kamera des Bildverarbeitungssensors mit einer größeren Auflösung (Pixelanzahl) gewählt wird, als die Auflösung des verwendeten Monitors bzw. des für die Bilddarstellung verwendeten Monitorausschnitts. Im Weiteren kann die Kamera mit wahlfreiem Zugriff auf bestimmte Ausschnitte des Gesamtbildes ausgestattet sein. Es ist dann möglich, dass im Live-Bild oder Beobachtungsbild des Koordinatenmessgerätes nur ein Ausschnitt des Gesamtbildes dargestellt wird, der auf das Format des jeweiligen Anzeigefensters bzw. Monitors vergrößert wird. Im Ergebnis hat der Anwender die Möglichkeit gezoomte Ausschnitte des Bildes entsprechend seinen Vorstellungen auszuwählen. Die Vergrößerung zwischen Messobjekt und Monitorbild kann durch Verändern des gewählten Ausschnittes des Kamerabildes durch die Software gesteuert werden oder auch das Live-Bild in gleicher Weise dargestellt werden. Die Vergrößerung zwischen Messobjekt und Monitorbild kann durch Verändern des gewählten Ausschnittes des Kamerabildes verändert werden. Dies kann gegebenenfalls durch einen Drehknopf, der in das Steuerungssystem des Koordinatenmessgerätes integriert ist, oder über einen Softwareregler bedient werden. Es ist fernerhin möglich, dass bei Einsatz einer hochauflösenden Kamera das Bild bzw. der Bildausschnitt nur in der geringeren Auflösung des Monitors angezeigt wird, im Hintergrund jedoch die volle Auflösung der Kamera zur digitalen Bildverarbeitung eingesetzt wird, um die Genauigkeit zu steigern. Die wirkliche optische Vergrößerung der Abbildungsoptik der Bildverarbeitung ist hierbei relativ gering (typisch 1-fach, höchstens jedoch 5-fach) und durch die Darstellung lediglich eines Ausschnittes des hoch auflösenden Kamerabildes auf dem geringer auflösenden Monitor wird die optische Wirkung einer höheren Vergrößerung erreicht.

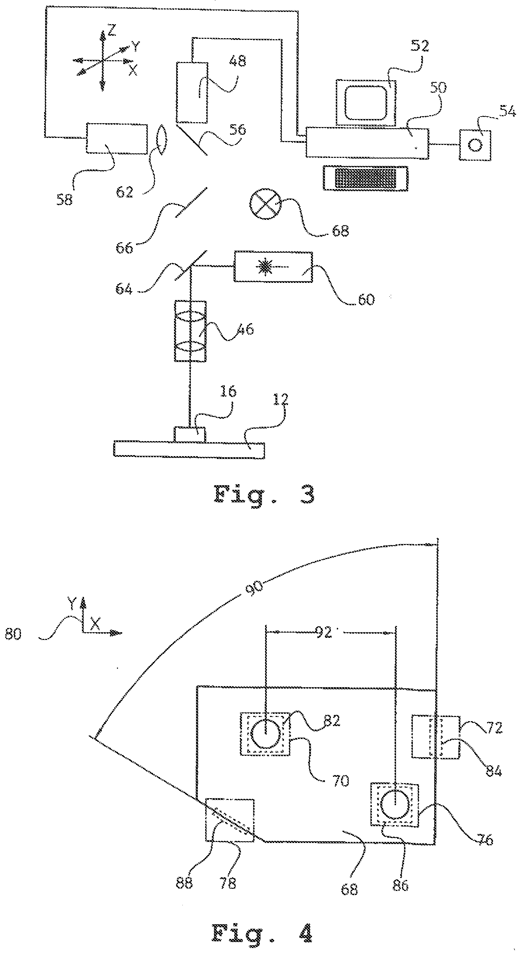

Das zuvor erläuterte Verfahren soll prinzipiell anhand der Fig. 3 erläutert werden. In der Fig. 3 ist ein Ausschnitt eines Koordinatenmessgerätes angeordnet. So ist auf dem Messtisch 12 das zu messende Objekt 16 dargestellt. Oberhalb des Messobjekts 16 sind ein Abbildungsobjektiv 46 sowie eine Kamera wie CCD-Kamera 48 angeordnet, die über einen Rechner 50 mit einem Monitor 52 verbunden ist. Durch die Hardware des Rechners 50 wird es möglich, die Auflösung zwischen der Kamera 48 und dem Monitor 52 rechnerisch anzupassen, um z. B. eine größere Kameraauflösung zu verwenden, als durch den Monitor 52 wiedergegeben werden kann. Gleichfalls ist es hierbei möglich, mit wahlfreiem Zugriff auf bestimmte Ausschnitte des Gesamtbildes zuzugreifen oder das Live- oder Beobachtungsbild des Koordinatenmessgerätes nur als Ausschnitt des Gesamtbildes auf das Format des Anzeigefensters vergrößert darzustellen. Durch die Wahl verschiedener Ausschnitte des erfassten Kamerabildes für die Darstellung auf dem Monitor 52 kommt für den Betrachter eine unterschiedlich wirksame Vergrößerung des Gesamtstrahlenganges zustande. Diese Vergrößerung kann durch Veränderung des Ausschnitts den Erfordernissen der Anwendung angepasst werden. Durch z. B. einen an den Rechner 50 angeschlossenen elektronischen Drehgeber 54 ist dies ergonomisch bedienbar. Es kann ferner realisiert werden, dass die eigentliche Bildauswertung im Rechner 50 mit der vollen Auflösung des erfassten Kamerabildes durch die Kamera 48 erfolgt. Als typische Vergrößerung für das Messobjektiv 46 kommt hierbei eine einfache, höchstens jedoch 5-fache Vergrößerung in Frage. Eine höhere optische Vergrößerung wird durch die zuvor beschriebene Auflösungsanpassung realisiert. Durch eine zusätzliche Anordnung eines Spiegels 56 und einer weiteren Kamera 58 ist es möglich, den Auslösungsbereich noch stärker zu variieren. Die Umschaltung erfolgt ebenfalls über den Rechner 50. Es können hierbei sowohl Kameras mit verschiedener Chipgröße bei gleicher Pixelanzahl als auch mit verschiedener Pixelanzahl bei gleicher Chipgröße oder beides kombiniert verwendet werden. Zusätzlich kann ein Laserabstandssensor 60 den gleichen optischen Strahlengang verwenden.

Im Ausführungsbeispiel wird die Kamera 58 mit einer zusätzlichen Nachvergrößerungsoptik 62 ausgestattet, um den Abbildungsmaßstab zu definieren. Die im Strahlengang verwendeten optischen Teiler oder Spiegel, die in der Fig. 3 mit den Bezugszeichen 56 und 64 gekennzeichnet sind, sind so ausgelegt, dass nach der Teilung alle betroffenen Kameras 48, 58 bzw. Sensoren 60 mit der gleichen Lichtintensität ausgestattet sind. Über einen weiteren optischen Teiler 66 und eine Beleuchtungseinrichtung 68 wird ein integriertes Hellfeldauflicht realisiert. Zusätzlich zu der erläuterten Verfahrensweise kann durch Re-Sampling aus dem jeweils erfassten Kamerabild ein noch höher aufgelöstes Kamerabild mit dem Zwecke der Darstellung einer noch höheren Vergrößerung dargestellt werden. Hierbei werden jeweils zwischen real gemessenen Bildpunkten zusätzliche Bildpunkte durch Interpolation rechnerisch ermittelt.

Ein Problem bei bekannten Koordinatenmessgeräten besteht darin, dass einmal erzeugte Programme zum Messen von Werkstücken nachträglich geändert bzw. nachträglich zusätzliche Merkmale aus den bereits gewonnenen Messergebnissen generiert werden sollen. Dies ist nach dem gegenwärtigen Stand der Technik nicht möglich, da die entsprechenden zugehörigen Technologiedaten nicht mehr vorhanden sind. Zur Lösung des Problems ist vorgesehen, dass die mit einem oder mehreren Sensoren des Koordinatenmessgerätes gemessenen Messpunkte bzw. Video-Bilder bzw. Röntgenbilder sowie deren zugehörige Position und andere Technologieparameter wie Einstellwert des verwendeten Beleuchtungssystems, Lichtintensität oder Vergrößerung des verwendeten Objektivs des Koordinatenmessgerätes während des Messablaufs aufgenommen, abgespeichert und für eine spätere Auswertung so zur Verfügung gestellt werden. Analog zu dieser beschriebenen Vorgehensweise ist es ebenfalls möglich, dass mit dem Bildverarbeitungssensor mehrere Teilbilder eines Messobjekts einzeln gemessen und zu einem Gesamtbild des Gesamtmessobjekts oder zu einem Gesamtbild von

Teilbereichen des gesamten Messobjekts zusammengefügt werden. Dieses Bild kann gespeichert werden und später auf einem separaten Arbeitsplatz ausgewertet werden. Hierzu werden ebenfalls die Kalibrierparameter des zur Bildaufnahme eingesetzten Koordinatenmessgerätes mitgespeichert und bei der Auswertung der Software erneut eingesetzt. Dies soll prinzipiell anhand der Fig. 4 erläutert werden.

Ein Messobjekt 68 soll mit einem Bildverarbeitungssensor gemessen werden. Mit den Bezugszeichen 70, 72, 76, 78 sind Bildausschnitte dargestellt, die bei verschiedenen Positionen im X-,Y-Koordinatensystem 80 des Koordinatenmessgerätes am Messobjekt 68 erfasst werden. Zusätzlich zu den eigentlichen X- und Y-Positionen werden die Bildinhalte der an den jeweiligen Positionen erfassten Objektausschnitte abgespeichert, dazu die jeweilig zugehörigen Bildverarbeitungsauswertefenster 82, 84, 86, 88 sowie die hierzu im Koordinatenmessgerät gespeicherten Parameter wie Vergrößerung des verwendeten Objektivs, Einstellwert des verwendeten Beleuchtungssystems. Nach Erfassung all dieser Werte kann auf einem Auswerterechner offline die eigentliche Messung der Bildinhalte und die Verknüpfung, z. B. die Messung eines Winkels 90 oder eines Abstandes 92, erfolgen.

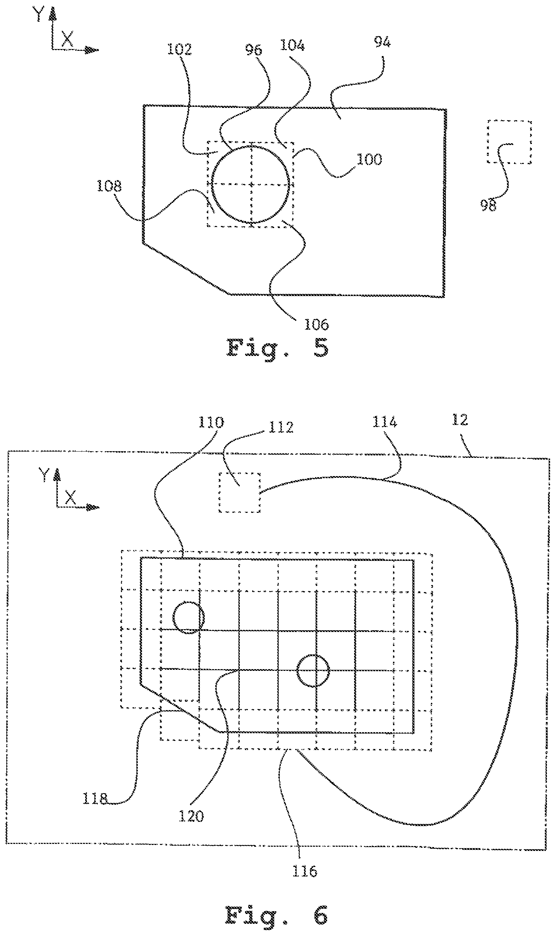

Für den Fall, dass beim Einsatz eines Bildverarbeitungssensors das Sehfeld der Kamera nicht ausreicht, um das durch Wählen des gewünschten Auswertebereichs (Bildverarbeitungsfenster) definierte Areal des Messobjekts auf einmal zu erfassen, ist vorgesehen, dass automatisch ein Bild aus mehreren Teilen zusammengesetzt wird, das dem Anwender anschließend wie ein gemessenes Bild dargestellt und zur Auswertung zur Verfügung gestellt wird. Dies wird prinzipiell anhand der Fig. 5 verdeutlicht. Es soll an einem Messobjekt 94 ein Merkmal in Form einer Bohrung 96 gemessen werden. Das Sehfeld 98 eines Bildverarbeitungssensors reicht nicht aus, um dieses Merkmal vollständig zu erfassen. Der Bediener setzt einen Auswertebereich 100, der deutlich größer als das Sehfeld 98 ist. Die Software erkennt dies automatisch und definiert im Ausführungsbeispiel vier Positionen 102, 104, 106, 108, die nacheinander gemessen werden, um ein Gesamtbild zusammenzufügen und das zu messende Merkmal, also im Ausführungsbeispiel die Bohrung 96, messtechnisch zu erfassen.

Mittels der Fig. 6 sollen beim Messen mit einer Bildverarbeitungssensorik folgende Verfahrensschritte verdeutlicht werden, die nacheinander ausgeführt werden:
- Suchen des Messobjekts im Messbereich des Koordinatenmessgerätes durch Fahren eines Sensors auf einem geradlinigen, spiralförmigen, mäanderförmigen, kreisbogenförmigen oder stochastischen oder anders gearteten Suchweg, bis die Existenz eines Messobjekts detektiert wird, und
- Starten eines Scanning der Außenkontur des Messobjekts (Konturverfolgung zur Erfassung der Geometrie und Lage der Außenkontur des Messobjekts).

Ferner können optional im Inneren der Außenkontur liegende Messpunkte auf dem Messobjekt durch Rastern mit einem Bildverarbeitungssensor und/oder Abtasten mit anderen Sensoren erfasst werden.

So liegt auf dem Messtisch 12 ein Messobjekt 110. Ein für die Messung benutzter Bildverarbeitungssensor weist einen Auswertebereich 112 auf. Durch Bewegung auf einer z. B. spiralförmigen Bahn 114 wird die prinzipielle Lage des Messobjekts 110 auf dem Messtisch 12 durch Änderung des Bildinhalts erkannt. Beim Auftreffpunkt des Bildverarbeitungssensors mit der Objektkontur (Bereich 116) beginnt ein Außenkontur-Scanning des Messobjekts 110 bis zur vollständigen Erfassung der Außenkontur entlang der Bahn 118 (Konturverfolgung). Danach wird zur vollständigen Erfassung des Gesamtmessobjekts automatisch ein rasterförmiges Erfassen des inneren Bereichs des Messobjektes 110 in den zuvor definierten Außengrenzen 120 durchgeführt, so dass anschließend das Gesamtmessobjekt 118 zur Auswertung zur Verfügung steht.

Ein Problem beim Einsatz von Koordinatenmessgeräten mit Bildverarbeitungssensoren besteht darin, dass die verschiedenen Beleuchtungssysteme nicht lineare Kennlinien aufweisen. Dies führt u. a. dazu, dass verschiedene Messobjekte nicht richtig gemessen werden können oder Programme von einem auf das andere Gerät nicht ohne Weiteres übertragbar sind. Um dieses Problem zu lösen, wird vorgeschlagen, dass die Kennlinien der Beleuchtungseinrichtungen des Bildverarbeitungssensorsystems des Koordinatenmessgerätes aufgenommen werden, d. h. es wird die Abhängigkeit der Beleuchtungsintensität vom Einstellbild der Bedieneroberfläche des Messgerätes durch

Messen der Intensität zum zugehörigen Einstellwert mit der Bildverarbeitungssensorik erfasst. Entsprechende Messergebnisse werden als Kennlinie im Rechner des Messgerätes gespeichert. Auch besteht die Möglichkeit, die Messwerte in einer sogenannten Lichtbox zu speichern, die die Steuerung der Beleuchtungsintensität im Betrieb des Koordinatenmessgerätes vornimmt. Führt man diese Lichtkennlinienmessung an einem kalibrierten Referenzobjekt oder zumindest für mehrere Geräte an einem einheitlichen Kalibrierobjekt durch, wird die Möglichkeit eröffnet, die Geräte in ihrem Verhalten nach außen hin, d. h. in ihrem Verhalten bezüglich Abhängigkeit Einstellwert Licht - physikalischer Beleuchtungswert auszugleichen und somit die Programmübertragbarkeit von verschiedenen Geräten sicherzustellen.

Um die Bedienung der Geräte zu erleichtern ist es sinnvoll, die Kennlinie so zu korrigieren, dass für den Bediener eine Linearität vorherrscht, d. h. , dass im Betrieb des Koordinatenmessgeräts die vorher eingemessene Kennlinie so für die Korrekturberechnung berücksichtigt wird, dass scheinbar eine lineare Kennlinie für den Bediener vorliegt. Sodann liegen die Einstellwerte und die Beleuchtungsintensität in linearer Beziehung zueinander. Der Anstieg dieser linearen Kennlinie kann sodann für mehrere Geräte durch einen einfachen Korrekturfaktor ausgeglichen werden.

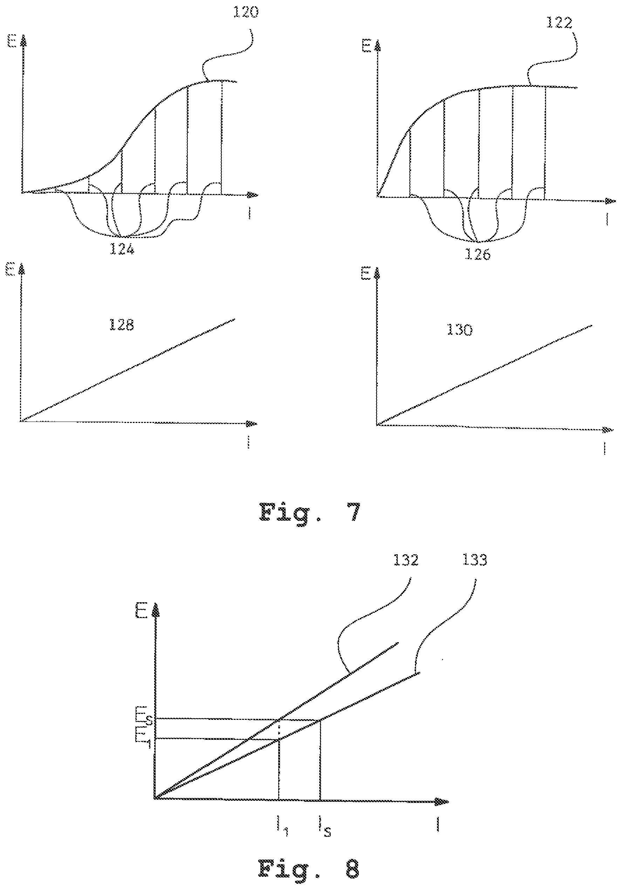

So ist in Fig. 7 oben links eine original Lichtkennlinie 122 eines Beleuchtungssystems für ein optisches Koordinatenmessgerät dargestellt. Die Beleuchtungsintensität E hängt nicht linear von dem Stromfluss I durch die Beleuchtungsquelle ab. In dem Graphen der Fig. 7 oben rechts ist eine ähnliche, jedoch im Detail unterschiedliche Kennlinie 122 eines zweiten Koordinatenmessgerätes wiedergegeben. Durch Erfassung der Abhängigkeit der Beleuchtungsintensität E von dem Stromfluss I an Stützstellen 124 bzw. 126 der jeweiligen Kennlinie 120 bzw. 122 und Hinterlegen dieser Stützstelleninformationen in einem Steuerrechner für die Beleuchtungseinstellung werden diese durch Division des Vorgabewertes zur Einstellung desjenigen Stroms I derart korrigiert, dass sich eine gleiche lineare Kennlinie für beide Messgeräte ergibt. Diese sind in den unteren Darstellungen der Fig. 7 wiedergegeben und mit den Bezugszeichen 128, 130 gekennzeichnet. Im Ergebnis sind bei einem Vorgabewert die gleichen Beleuchtungsintensitäten erreicht.

Fig. 8 zeigt die Vorgehensweise zum Regeln der Lichtintensität E. Beim Erstellen eines CNC-Programms für das Messen mit z. B. Bildverarbeitungssensorik wird im Teach-In durch die Kombination von Koordinatenmessgerät mit Messobjekt im z. B. Auflicht eine Lichtkennlinie 132 wirksam. Der Sollwert der Beleuchtungsintensität Eₛ wird durch den Beleuchtungsstrom I₁ eingestellt. Wird nun ein anderes Messobjekt oder eine andere Stelle des Messobjektes gemessen, können sich die Reflexionseigenschaften des Materials geändert haben, was zu einer Änderung des Anstiegs der Lichtkennlinie führt. Diese zweite Lichtkennlinie 133 ist ebenfalls in Fig. 8 dargestellt. Wird nun die Beleuchtungsintensität nach Einstellen des Stromes I₁ gemessen, wird als Ergebnis die Beleuchtungsstärke E₁ ermittelt. Diese entspricht nicht dem Sollwert Eₛ. Da aus I₁ und E₁ der Anstieg der nun aktuell gültigen Lichtkennlinie bekannt ist, kann auf einfache Weise der notwendige Strom Iₛ errechnet werden, um die Soll-Iststärke Eₛ einzustellen. Der physikalische Aufbau für den zuvor beschriebenen Vorgang ist der Fig. 2 zu entnehmen, in der die Lichtquelle 68, der Spiegel 66 und das Objektiv 46 die Beleuchtungseinrichtung darstellen. Die Berechnung erfolgt über den Rechner 50. Das Reflexionsverhalten des Messobjekts 16 ist innerhalb der Messobjekte unterschiedlich und erzeugt die unterschiedliche Reaktion auf Strom I und Beleuchtungsintensität E.

Mit Koordinatenmessgeräten ist es möglich, Konturen auf Werkstückflächen zu scannen. Dies kann sowohl mit einem Sensor oder auch bei kombiniertem Betrieb mit mehreren Sensoren realisiert werden. Erfolgt eine Auswertung der Konturen durch Vergleich mit Sollkonturen aus z. B. CAD-Files, ist es erforderlich, Soll- und Ist-Rechner intern übereinander zu legen, um einen grafischen Vergleich zu realisieren. Insbesondere bei flexiblen oder biegsamen Teilen ist dies durch einfaches Verschieben der Relativlage oder Verdrehen der Relativlage nicht möglich, da die Teile elastisch verformt sind. Durch Vorgehen nach der wie folgt beschriebenen eigenerfinderischen Gehalt aufweisenden Methode, wird dieses Problem gelöst. Es werden bei der Best-Einpassung zwischen Soll- und Ist-Kontur neben der Relativlageveränderung zwischen Soll- und Ist-Kontur an sich auch die Länge von Konturabschnitten entsprechend der Soll-Länge bei Beibehaltung der Krümmung oder alternativ die Konturkrümmung bei Beibehaltung der Konturlänge an der Ist-Kontur so verändert, dass eine optimale Überdeckung mit der Soll-Kontur erreicht wird. Sind Teile mit ausgezeichneten Geometriemerkmalen durch Elastizität oder Verformung schwierig zu überprüfen, kann dieser Vorgang dadurch unterstützt werden, dass die Einpassung zwischen Ist- und Soll-Kontur an einer Gruppe von Ist- und Soll-Konturen an einzeln ausgezeichneten Merkmalen, wie Kreuzungspunkten von Konturen oder Kreisstrukturen oder anderen wiederkehrenden Strukturen erfolgt und so einer Verzerrung der Ist-Kontur zur optimalen Überdeckung mit der Soll-Kontur generiert wird. In analoger Weise ist dies bei zylindrischen Teilen möglich, in dem die auf der Zylinderoberfläche gemessenen Konturen auf der Zylindermantelfläche partiell verdreht oder verschraubt werden, um eine optimale Überdeckung zwischen Soll- und Ist-Kontur herzustellen. Diese Verfahrensweise bietet sich insbesondere zur Messung von in der Medizin üblichen Stents an. Die oben beschriebene Methode ist auch in analog umgekehrter Vorgehensweise, d. h. Anpassung der Soll- an die Ist-Geometrie möglich.

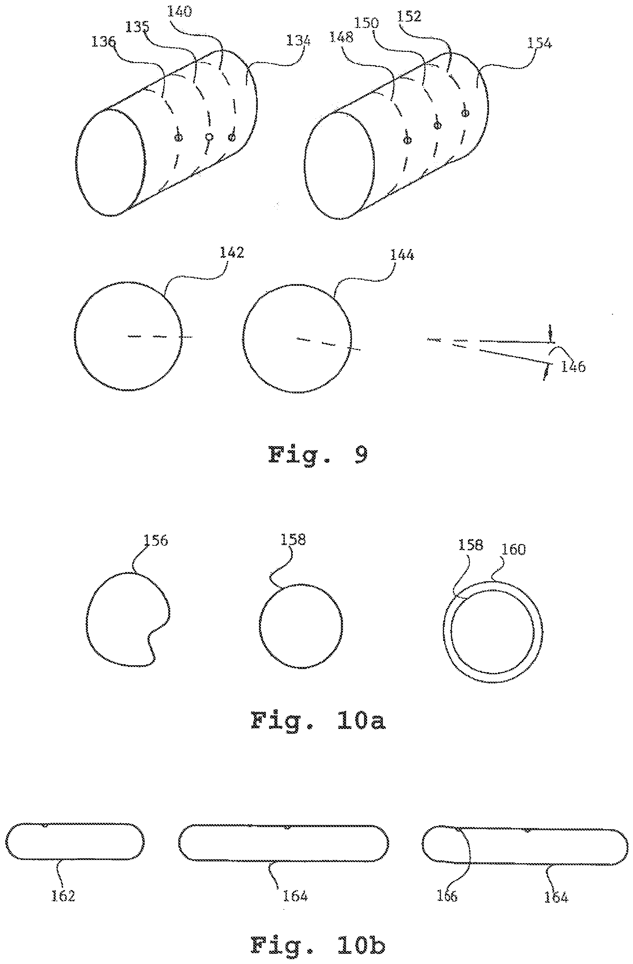

Fig. 9 soll prinzipiell verdeutlichen, dass die Ist-Kontur zur optimalen Überdeckung mit der Soll-Kontur in einer Zylinder-Mantel-Fläche partiell verdreht oder verschraubt wird. Mit dem Bezugszeichen 134 ist eine Punktwolke dargestellt, die im Wesentlichen durch eine zylinderförmige Mantelfläche repräsentiert wird. Durch Verzug des Messobjekts sind die Strukturen auf dieser zylinderförmigen Mantelfläche entlang der Zylinderachse zueinander verdreht bzw. verwunden. Diese Verwindung wird mathematisch durch Rückdrehen der Strukturen in die Ausgangsposition kompensiert. Dies wird dadurch realisiert, dass die jeweiligen Schnitte der Messpunktwolke quer zur Zylinderachse über einen Soll-/Ist-Vergleich mit entsprechenden Solldaten verglichen werden und hieraus die notwendige Verdrehlage für den jeweiligen Schnitt berechnet wird. Dies wird dann für beliebig viele Schnitte durch die Zylinderachse durchgeführt bzw. zwischen einzelnen Schnitten interpoliert die Verwindung korrigiert. In der unteren Darstellung der Fig. 9 sind Schnitte und Soll-/Ist-Vergleich und Rückdrehen dargestellt. Erwähntermaßen wird mit dem Bezugszeichen 134 die Messpunktwolke eines eine Zylinderform aufweisenden Messobjektes wiedergegeben. Dabei wird die Messpunktwolke 134 mit Verwindung dargestellt, wobei in den Schnitten 136, 138, 140 jeweils eine unterschiedlich starke Verwindung vorliegt. In diesen Schnittebenen wird entsprechend der Darstellung gemäß dem unteren Teil der Fig. 9 eine Sollpunkt-Lage 142 mit einer Istpunkt-Lage 144 verglichen und hieraus der Verdrehwinkel 146 berechnet. In dieser Weise wird für die verschiedenen Schnitte 136, 138, 140 verfahren und die Messpunkte dazwischen interpoliert. Es ergibt sich eine Messpunktwolke mit Verwindungskorrektur in den Schnittebenen 136, 138, 140. Die korrigierten Schnittebenen sind in Fig. 9 rechts oben mit dem Bezugszeichen 148, 150, 152 gekennzeichnet. Es ist somit möglich, z. B. die Auswertefenster für nachfolgende Bildverarbeitungssensoren an den zu den Strukturen zugeordneten Orten entsprechende Solldaten festzulegen. Die zu der Punktwolke 134 korrigierte Punktwolke ist mit dem Bezugszeichen 154 versehen.

Fig. 10 a zeigt ein Beispiel, wie aus einer Ist-Kontur 156 durch Veränderung der Krümmung bei Beibehaltung der Länge eine bessere Überdeckung zu einer Sollkontur 158 für den anschließenden Vergleich mit dieser hergestellt werden kann. Kreis 160 stellt hierbei dar, dass durch Krümmungsveränderung bei konstanter Länge (in diesem Fall Umfang) eine bessere Anpassung an die Soll-Kontur 158 ermöglicht wird.

In Fig. 10b ist gezeigt, wie bei Beibehaltung der Krümmung der Konturen durch Veränderung der Länge von Konturabschnitten eine bessere Überdeckung zwischen Soll-/Ist-Wert zum Zwecke des späteren Vergleichs ermöglicht wird. Dabei ist mit dem Bezugszeichen 162 die Ist-Kontur und mit dem Bezugszeichen 164 die Soll-Kontur wiedergegeben. Die Kontur 166 ist die durch Streckung bei Beibehaltung der Krümmung an die Soll-Kontur 164 angepasste Ist-Kontur.

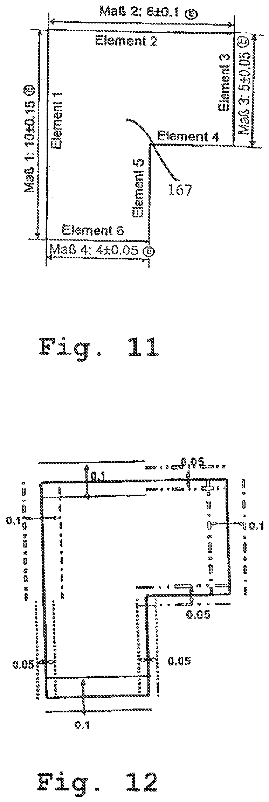

Bei der Auswertung der Abweichung zwischen Soll- und Ist-Kontur können die der Soll- oder Ist-Kontur zugeordneten Toleranzzonen ausgewertet werden. Dabei werden die Toleranzzonen automatisch den Maßzahlenangaben einer CAD-Zeichnung entnommen oder alternativ durch Bedienerangaben definiert. Anhand der Erläuterungen zu den Fig. 11 und 12 soll das Verfahren näher beschrieben werden.

So ist in Fig. 11 ein Werkstück 167 bestehend aus den Elementen 1 bis 6 mit zugehörigen Bemaßungen (Maß 1 bis Maß 4) sowie die zu den Maßen zugehörigen Toleranzen wiedergegeben. Die entsprechenden Maße und Toleranzen können aus einer CAD-Zeichnung entnommen werden, alternativ jedoch auch durch Bedienereingaben definiert werden. In einem ersten Schritt wird nach allen Elementen in dem vorliegenden Beispiel eine zweiseitige, symmetrische Toleranzzone zugeordnet, die pro Element unterschiedliche Breiten aufweisen kann. Aus der Fig. 11 ist ersichtlich, dass dem Element 1 durch Maß 2 bezüglich Element 3 und durch Maß 4 bezüglich Element 5 zwei unterschiedlich breite Toleranzzonen zugeordnet werden müssen. Analog sind dem Element 2 bezüglich Element 4 durch Vorgabe des Maßes 3 und bezüglich Element 6 durch Vorgabe des Maßes 1 unterschiedliche Toleranzzonen zuzuordnen. Die Berechnung und Zuordnung der unterschiedlichen Toleranzzonen zu den Elementen erfolgt automatisch durch Analyse sämtlicher Bezugsmaße, die für ein Element innerhalb der Zeichnung definiert sind und durch automatische Unterteilung der Toleranzzonen pro Zeichnungselement entsprechend der für das Element vorhandenen Bezugsmaße.

Im vorliegenden Beispiel bedeutet dies, dass für das Element 1 automatisch zwei Toleranzzonen definiert werden (s. Fig. 12). Die obere Toleranzzone entsteht durch die dem Maß 2 zugeordnete Toleranz, die untere Toleranzzone entsteht durch die dem Maß 4 zugeordnete Toleranz. Entsprechend werden dem Element 2 zwei Toleranzzonen zugeordnet, wobei die in Fig. 12 dargestellte linke Toleranzzone für Element 2 aus der dem Maß 1 zugeordneten Toleranzzone entsteht, die rechte Toleranzzone für Element 2 durch die dem Maß 3 zugeordnete Toleranzzone entsteht. Die an dem realen Werkstück 166 aufgenommenen Messpunkte werden in einem ersten Schritt entsprechend ihrer Lage einer der automatisch bestimmten Toleranzzonen zugeordnet. Zur Überprüfung der Einhaltung der Toleranzzonen werden die den jeweiligen Toleranzzonen zugeordneten Messpunkte bestmöglich in die um die Sollkontur definierten Toleranzen im Werkstück 166 ohne Bindung von Freiheitsgraden eingepasst, wobei die Einpassbedingungen abhängig von der Toleranzart automatisch ausgewählt werden. Die entsprechende Überprüfung auf Toleranzzonenauswertung erfolgt sequentiell für alle Toleranzzonen und alle diesen Toleranzzonen jeweils zugeordneten Messpunkte.

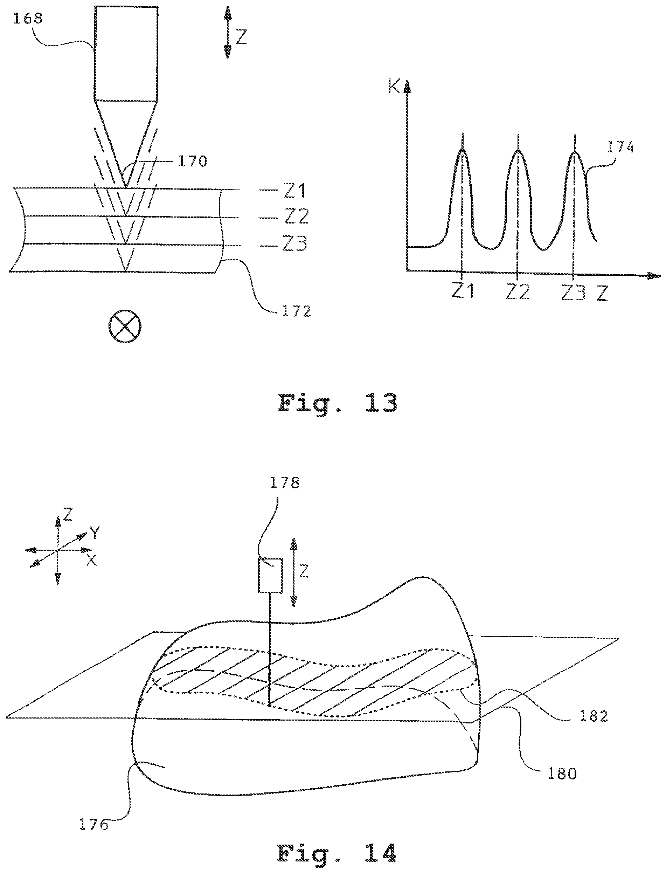

Bei Einsatz einer Bildverarbeitung mit Autofokussensoren besteht häufig das Problem, dass teiltransparente Schichten in ihrer Höhenausdehnung gemessen werden müssen. Hierzu wird vorgeschlagen, dass mit dem Bildverarbeitungssensor im Autofokusbetrieb für mehrere Auswertebereiche gleichzeitig Autofokusmesspunkte an mehreren semi-transparenten Schichten generiert werden. Dies wird dadurch realisiert, dass der Bildverarbeitungssensor in Messrichtung verfahren und gleichzeitig mehrere Bilder aufgenommen werden. In den jeweils festgelegten Auswertebereichen werden entsprechend einem Kontrastkriterium die Fokusmesspunkte errechnet. Dies ergibt sich aus der Fig. 13. Ein Bildverarbeitungssensor 168 wird zur Realisierung eines Autofokusverfahrens entsprechend der Z-Achse so bewegt, dass der Fokuspunkt 170 des Sensors 168 in unterschiedlichen Positionen innerhalb des semi-transparenten Messobjekts 172 platziert wird. Hierdurch wird eine Kontrastkennlinie 174 aufgenommen. Jedes Maximum der Kontrastkennlinie repräsentiert den Ort der jeweils semi-transparenten Grenzschicht zwischen verschiedenen Materialschichtarten und aus dieser Kontrastkurve 174 können sodann die entsprechend zugeordneten Z-Positionen Z1, Z2 und Z3 berechnet werden. Hierbei kommen übliche Verfahren zum Kontrastautofokusmessen zum Einsatz.

Mit Laserabstandssensoren in Koordinatenmessgeräten werden Konturen auf Werkstückoberflächen in Sensorrichtung gescannt, d. h. in einer Richtung, verschieden von der Sensormessrichtung, wird das Koordinatenmessgerät auf einer vorgegebenen Bahn bewegt. Es ist nun vorgesehen, dass die Lageregelung des Sensors bzw. der Lageregelkreis des Koordinatenmessgerätes in Abhängigkeit von der Auslenkungsanzeige des Laserabstandssensors so gesteuert wird, dass die Auslenkung des Laserabstandssensors konstant bleibt. Somit ist es möglich, Höhenlinien an einem Messobjekt zu scannen. Ein entsprechendes Höhenlinienscanning wird anhand der Fig. 14 verdeutlicht. So liegt ein Messobjekt 176 auf einem Messtisch eines Koordinatenmessgerätes und wird mit einem Abstandssensor wie Laserabstandssensor 178 des Koordinatenmessgerätes gescannt. Dabei wird grundsätzlich der Laserabstandssensor 178 in seiner Bewegung so gesteuert, dass der Abstand zur Materialoberfläche konstant ist. Im konkreten Fall wird die Z-Position des Sensors 178 konstant gehalten und durch Regeln der X- und Y-Position erreicht, dass der Sensormesspunkt immer in einer Ebene 180 bleibt und somit eine Höhenlinie 182 am Messobjekt 176 gescannt wird.

Ein weiteres Problem beim Einsatz von Koordinatenmessgeräten besteht darin, dass die Messobjekte von verschiedenen Seiten gemessen werden müssen. Wird jedoch die Lage des Messobjekts im Koordinatenmessgerät verändert, geht der Bezug der Messpunkte untereinander verloren und eine gemeinsame Auswertung der Messpunkte ist nicht mehr möglich. Um diese Nachteile zu vermeiden, wird wie folgt verfahren:
- Messen der Position von einer oder mehreren, vorzugsweise drei Referenzmarken 184, 186 188 in Form von z. B. Kugeln am Messobjekt 190 bzw. einer das Messobjekt 190 aufnehmenden Halterung 191 wie Rahmen,
- Speichern der Position im Rechner des Koordinatenmessgerätes,
- Messen von beliebigen durch ein oder mehrere Sensoren 192 zugänglichen Punkten 194 am Messobjekt 190,
- Veränderung der Lage des Messobjekts 190 im Messvolumen des Koordinatenmessgerätes durch Hand oder eine integrierte Drehachse oder Drehschwenkachse (Pfeil 196),
- erneutes Messen der Referenzmarken 184, 186, 188 und Bestimmung deren veränderter Position 198, 200, 202 im Messvolumen des Koordinatenmessgerätes,
- interner Abgleich der jeweiligen Referenzmarken 184, 186, 188 bzw. deren Positionen 198, 200, 202 derart, dass zwischen diesen software-intern eine minimierte Verlagerung vorliegt,
- Messen weiterer Punkte 204 am Messobjekt 190 mit einem oder mehreren Sensoren 192 des Koordinatenmessgerätes,
- Wiederholung der oben genannten Vorgänge in beliebiger Anzahl,
- gemeinsame Auswertung aller, während der oben beschriebenen Messzyklen erfassten Messpunkte 194, 204 des Messobjekts 190 in einem Koordinatensystem.

Koordinatenmessgeräte mit verschiedenen Sensoren weisen unter anderem auch wahlweise Sensoren mit einem opto-taktilen Taster auf. Dabei erfolgt die Bestimmung der Lage des Antastformelementes (Kugel- oder Zylinder) durch einen Bildverarbeitungssensor. Das Problem besteht darin, diesen Sensor zur Position der Tastkugel zu justieren. Dies kann dadurch gelöst werden, dass auf der den Sensor tragenden Koordinatenachse zusätzlich eine Verstelleinheit angeordnet wird, die eine Relativverstellung zwischen dem Antastformelement (Tastkugel inklusive Taststift und Halter) in dem Bildverarbeitungssensor ermöglicht. Z. B. über ein Autofokusverfahren ist danach ein automatisches Scharfstellen des Antastformelementes in der Relation zum Bildverarbeitungssensor möglich.

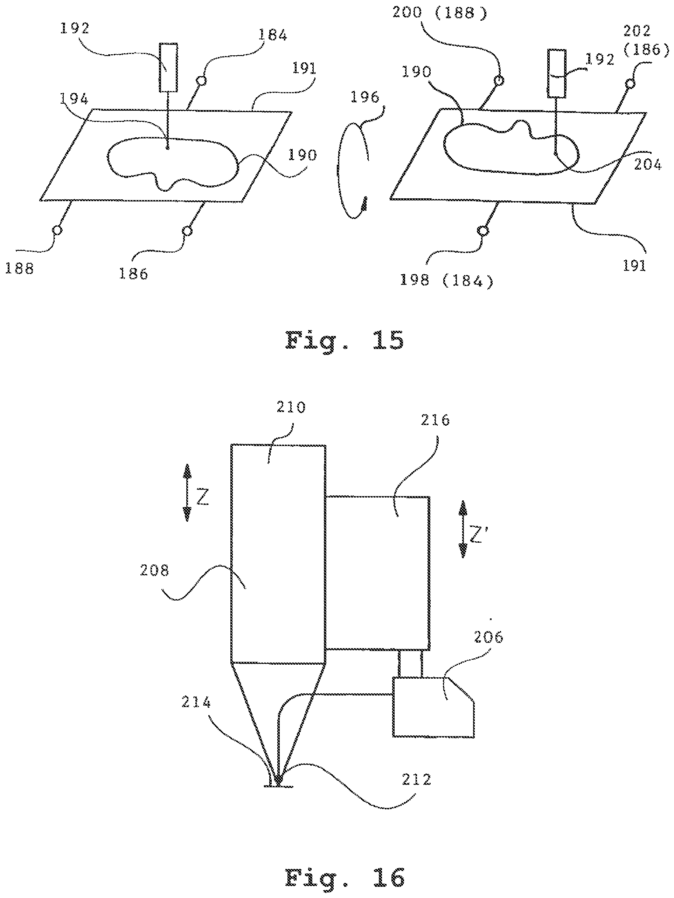

So ist in Fig. 16 ein taktil-optischer Sensor 210 (auch opto-taktiler Sensor genannt) in einem Koordinatenmessgerät auf einer Verstellachse 208 angeordnet, die auf einer Koordinatenachse des Koordinatenmessgerätes, vorzugsweise der Z-Achse 208 aufgesetzt ist, die im Ausführungsbeispiel mit der optischen Achse eines optischen Sensors 210 zusammenfällt. Durch separates Ansteuern einer zweiten Z-Achse (Stelleinrichtung 210) wird es möglich, die Relativposition zwischen Antastformelement 212 des taktil-optischen Sensors 206 zur Scharfebene 214 des optischen Sensors 210 gezielt zu verstellen.

Koordinatenmessgeräte sind im Allgemeinen am Einsatzort unterschiedlichen Einsatztemperaturen ausgesetzt. Sind mehrere Sensoren am Koordinatenmessgerät angebracht, führt dies dazu, dass thermisch bedingt sich die Positionen zwischen den verschiedenen Sensoren verändern. Dies führt zu Messfehlern. Zur Kompensation dieser wird die Temperatur der zur Befestigung der verschiedenen Sensoren benötigten mechanischen Baugruppen an einer oder mehreren Stellen gemessen und die Ausdehnung der entsprechenden mechanischen Komponenten bei der Berechnung der Messpunkte, die von den verschiedenen Sensoren erfasst werden, berücksichtigt.

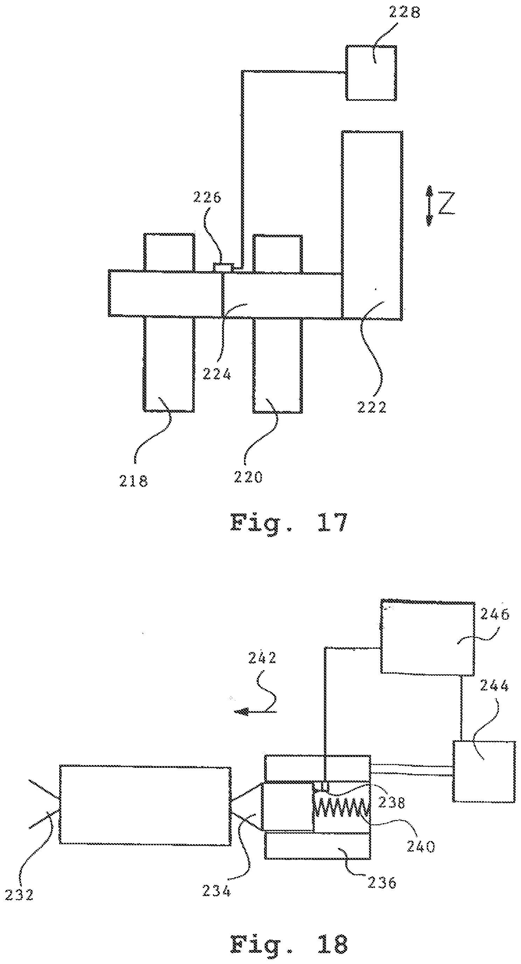

So zeigt Fig. 17 beispielhaft eine Anordnung mit zwei Sensoren 218, 220 an einer Z-Achse 222 eines Koordinatenmessgerätes. Die Sensoren 218, 220 sind eine oder mehrere Verbindungselemente 224 miteinander und der Z-Achse 222 verbunden. Durch einen Temperatursensor 226 wird die Temperatur des oder der Verbindungselemente 224 während der Messung fortwährend gemessen und über einen Auswerterechner 228 die entsprechende Längenveränderung korrigiert und für die Messergebnisse berücksichtigt. Um ein Messobjekt während des Messens auf einem Koordinatenmessgerät von mehreren Seiten messen zu können ist es sinnvoll, dass das Messobjekt in eine Drehachse eingespannt und so in eine für die Messung mit den verschiedenen Sensoren optimale Position eingedreht werden kann. Ergänzend hierzu ist es möglich, das Messobjekt zusätzlich zur Drehachse selbst mit einer entsprechend angeordneten Gegenspitze aufzunehmen. Beim Einspannen eines Messobjekts zwischen Spitzen tritt jedoch das Problem auf, dass die Spannkraft der Gegenspitze zu Verformungen des Messobjekts führen kann. Um hierdurch bedingte Fehler auszuschließen, wird vorgeschlagen, dass das Messobjekt konstant verformt wird bzw. die Gegenspitze automatisch bis zur Erreichung einer vordefinierten Kraft an das Messobjekt heranpositioniert wird. Dabei kann die Gegenspitze gefedert gelagert sein, so dass über eine Auslenkung und einen entsprechenden Endschalter die entsprechend geforderte Kraft bestimmt werden kann.

So zeigt Fig. 18, wie beim Einspannen eines Messobjekts 230 Spitze 232 und Gegenspitze 234 bis zu einem Punkt durch eine Führung 236 gegen das Messobjekt 230 geschoben wird, bis die Gegenspitze 234 mit einem Endschalter 238 wechselwirkt. Dabei kann z. B. eine Vorspannung mittels einer Vorspannfeder 240 erzeugt werden, wobei die Zustellbewegung (Pfeil 242) der Gegenspitze 234, die durch einen entsprechenden Antrieb 244 auf die Führung 236 erreicht wird, dann unterbrochen wird, wenn die Gegenspitze 234 auf dem Endschalter 238 oder ein gleichwirkendes Element einwirkt. Hierdurch ist die Vorspannkraft des eingespannten Messobjektes 236 eindeutig definiert.

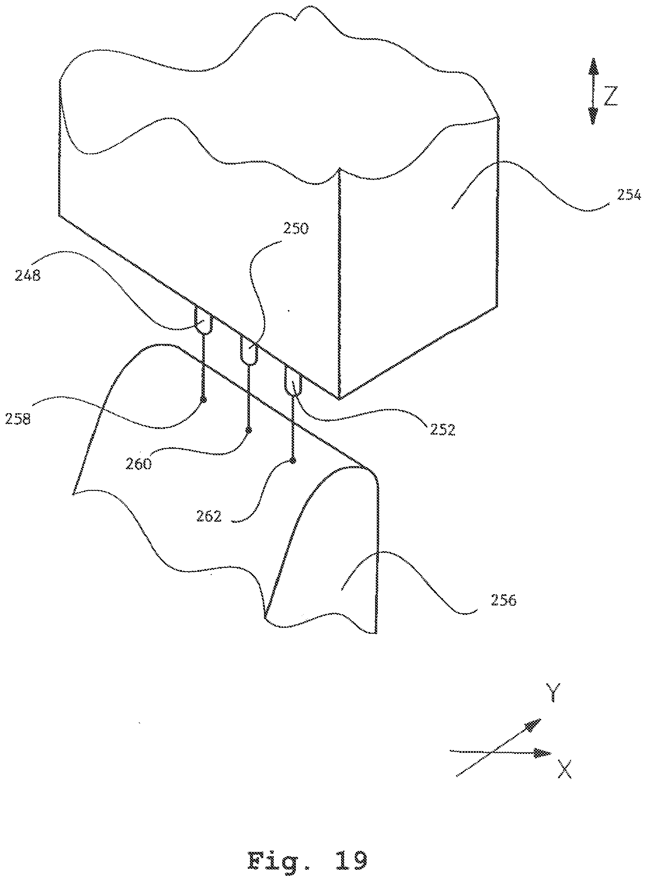

Ein weiteres Problem beim Einsatz von Koordinatenmessgeräten besteht darin, dass oft mehrere Konturen nahe beieinander gemessen werden sollen. Dies führt bei der geforderten Anzahl oft zu erheblich langen Messzeiten. Es ist vorgesehen, dass mehrere taktile Sensoren gleichartiger oder unterschiedlicher Bauweise dicht beieinander auf einer gemeinsamen mechanischen Achse des Koordinatenmessgerätes angeordnet werden. Fig. 19 zeigt ein Beispiel. So werden mehrere taktile Sensoren 248, 250, 252 auf einer gemeinsamen Z-Achse 254 eines Koordinatenmessgerätes angeordnet. Beim Antasten eines Messobjekts 256 werden so gleichzeitig Messpunkte 258, 260, 262 für verschiedene Positionen gemessen, die dann gemeinsam im Koordinatenmessgerät ausgewertet werden.

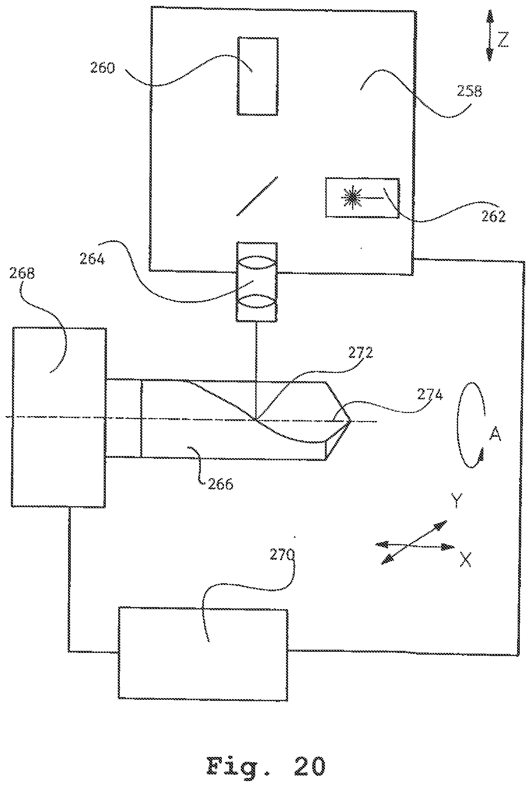

Beim Messen mit einem Bildverarbeitungssensor an Außenkanten von Werkstücken wie Schneidwerkzeugen besteht das Problem, dass der Bildverarbeitungssensor auf die zu messende Außenkante permanent nachzufokussieren ist. Um diesen Nachteil zu vermeiden, ist vorgesehen, dass zusätzlich in dem Bildverarbeitungsstrahlengang ein Laserabstandssensor integriert wird. Der Lasersensor misst in der Nähe der zu messenden Außenkante den Abstand des Bildverarbeitungssensors zur Werkstückoberfläche und ist mit einem Lageregelkreis des Koordinatenmessgerätes so verbunden, dass eine automatische Nachführung erfolgt. Der Bildverarbeitungssensor ist somit permanent fokussiert. Dies wird anhand der Fig. 20 prinzipiell verdeutlicht. An einer Z-Achse 258 eines Koordinatenmessgerätes sind zwei miteinander kombinierte Sensoren 260, 262 zur Bildverarbeitung und Laserabstandsmessung kombiniert, die über ein gemeinsames optisches System 264 Messpunkte auf einem Werkzeug 266 erfassen. Drehachse 268 des Werkzeugs 266 wird durch ein Computer- und Steuerungssystem 270 des Koordinatenmessgerätes, das auch über die Sensorsignale des Koordinatenmessgerätes verfügt, so gesteuert, dass die mit dem Laserabstandssensor 262 gemessenen Messpunkte auf einer Spanfläche 272 des Werkzeuges 266 die Einstellungen der Drehachse 268 so beeinflussen, dass die Schneidkante an diesem Ort jeweils in der Abschnittebene 274 des Werkzeuges zum Liegen kommt. Mit dem Bildverarbeitungssensor 260 des gleichen Koordinatenmessgerätes ist es dadurch möglich, die Außenkontur des entsprechenden Werkzeuges zu messen. Bei konstantem Drehen und Verfahren von X-, Y- und Z-Achse des Koordinatenmessgerätes kann dieser Vorgang kontinuierlich wiederholt werden und somit ein Scannen in allen drei Koordinaten gleichzeitig durchgeführt werden.

Bei einem Koordinatenmessgerät können Bildverarbeitungssensoren mit in den Strahlengang integrierten Lasersensoren zum Einsatz gelangen. Bei praktisch eingesetzten Systemen ist zu erwarten, dass die gewünschten optischen Eigenschaften für den integrierten Laserabstandssensor und den Bildverarbeitungssensor nicht bei den gleichen Einstellparametern (Arbeitsabstand / Vergrößerung) vorliegen. Durch eine zusätzlich einwechselbare Vorsatzoptik können Apertur und Arbeitsabstand des verwendeten Zoomoptiksystems alternativ für den Lasersensor und den Bildverarbeitungssensor optimiert werden.

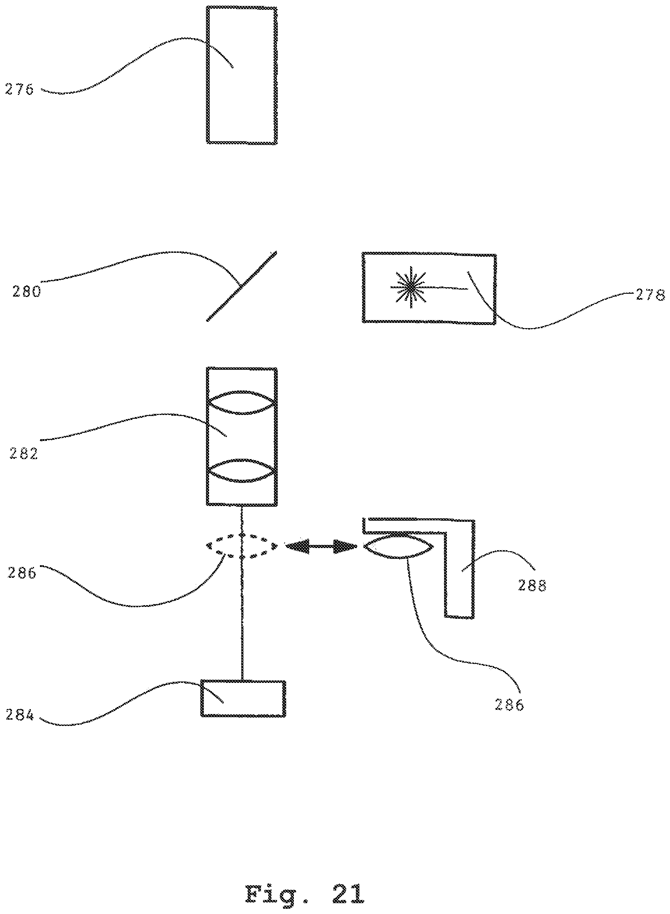

So sind in Fig. 21 ein Bildverarbeitungssensor 276 und ein Laserabstandssensor 278 dargestellt, die über einen Strahlenteiler 280 mit einem gemeinsamen Messobjektiv 282 in einem Koordinatenmessgerät eingesetzt sind. Dabei soll ein Messobjekt 284 angetastet, also im vorliegenden Fall berührungslos gemessen werden. Durch Einwechseln einer zusätzlichen Voroptik 286, die in einer Wechselstation 288 abgelegt werden kann, besteht die Möglichkeit, die optischen Eigenschaften des Gesamtstrahlengangs zu verändern. Dieser wird durch das Messobjektiv 282 und bei in dessen Strahlengang befindlicher oder nicht befindlicher Voroptik 286 bestimmt. Hierdurch kann eine Optimierung der Einstellparameter für den Laserabstandssensor 278 bei vorgeschalteter Voroptik 286 bzw. für den Bildverarbeitungssensor 276 bei entfernter Voroptik 286 oder umgekehrt erfolgen.

Wird mit einem Autofokussensor die Oberflächenkontur von Werkstücken gemessen, werden die Messpunkte üblicherweise vom Bediener im Teach-in-Modus vorgegeben. Sollen unbekannte Konturen in diesem Verfahren gemessen werden, ist dies nur schwierig möglich. Um dies zu vermeiden, wird vorgeschlagen, dass mit einem Autofokussensor ein Scanningvorgang einer Materialoberfläche dadurch durchgeführt wird, dass aus den bereits gemessenen Fokuspunkten durch Extrapolation der voraussichtliche Ort des nächsten Messpunktes theoretisch errechnet und durch einen neuen Autofokuspunkt exakt nachgemessen wird. Wird dieser Vorgang mehrfach hintereinander wiederholt, ergibt sich ein vollautomatisches Scanning. Dabei kann sowohl die Anzahl der zu scannenden Punkte entlang einer Linie als auch ein zu scannender Bereich am Werkstück bzw. Messobjekt vom Bediener vorgegeben werden. Die Extrapolation des nächsten Messpunktes aus den beiden oder mehreren vorhergehenden Messpunkten kann durch eine lineare Extrapolation erfolgen.

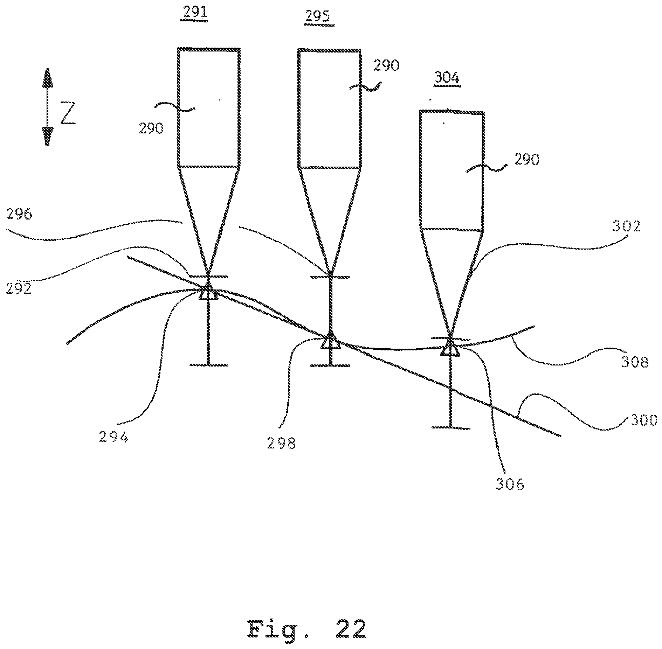

So zeigt Fig. 22 ein entsprechendes Verfahren zum Scanning einer Materialoberfläche mit einem Autofokussensor. Ein Autofokussensor 290 wird in einem ersten Ort 191 durch Bewegung in der Z-Achse des Koordinatenmessgerätes zum Messen eines Oberflächenpunktes eingesetzt. Hierzu wird das Kontrastverhalten über einen Fokusbereich 292 aufgenommen und hieraus der Fokusort 294 entsprechend dem Messpunkt berechnet. Der gleiche Vorgang wird an einer nächsten Position 295 wiederholt mit entsprechendem Fokusmessbereich 296 und Messpunkt 298. Durch z. B. Interpolation einer Geraden 300 wird die Lage des Fokusmessbereichs 302 und somit des Sensors 290 in der Position 304 definiert und dort ein Messpunkt 306 gemessen. Dieser Vorgang wird nacheinander so oft wiederholt, bis die gesamte Länge der Kontur 308 des zu messenden Objektes oder eines Teils davon gemessen wurde.

Beim Einsatz von Bildverarbeitungssensoren oder Röntgentomographiesensoren tritt das Problem auf, dass je nach Eigenschaft des Messobjekts innerhalb eines Bildes sowohl Bereiche mit starken als auch mit schwachen Intensitäten vorliegen. Dies wird durch die unterschiedlichen Reflexions- bzw. Transmissionseigenschaften der Materialien verursacht. Im Ergebnis sind für die "dunklen" Bildbereiche nur geringe Signale vorhanden mit daraus folgendem schlechten Signalrauschverhältnis. Eine stärkere Beleuchtung bzw. Bestrahlung des Objekts würde jedoch zum Überstrahlen in den hellen Bereichen führen und schließt sich somit aus.

Um diese Nachteile zu vermeiden, ist vorgesehen, dass zu jedem Bildausschnitt mehrere Bilder mit unterschiedlichen Beleuchtungsintensitäten aufgenommen werden. Anschließend werden diese Bilder des gleichen Objektbereiches in der Weise zu einem neuen Gesamtbild zusammengeführt, dass die Bildpunktamplituden auf die jeweilige Beleuchtungs- bzw. Bestrahlungsintensität, die verwendet wurde, normiert werden. Zur Gesamtbildzusammensetzung werden anschließend die Pixel auf dem jeweiligen Bild verwendet, die innerhalb des zugelassenen Dynamikbereiches liegen. Amplituden mit Überstrahlung werden aus dem jeweiligen Bild nicht berücksichtigt.

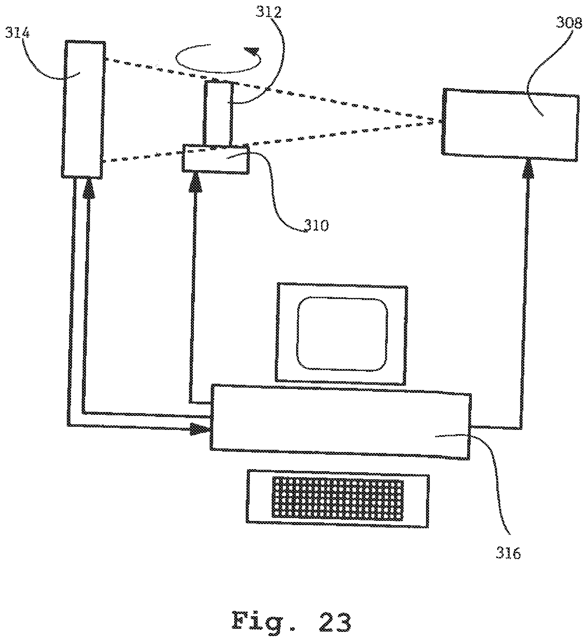

Entsprechend ist in Fig. 23 eine Röntgenstrahlenquelle 308, ein Drehtisch 310 mit einem Messobjekt 312 sowie ein Röntgensensor 314 dargestellt. Die Bildpunktamplitude des Röntgendetektors 314 wird in einem Rechner- und Auswertesystem 316 gespeichert und entsprechend zuvor erläuterter Verfahrensschritte bewertet und zusammengefügt. Dabei ist es möglich, die Röntgenfrequenz der Strahlungsquelle 308 sowie Aufnahmeparameter des Detektors 316 entsprechend der beschriebenen Verfahrensweise durch das Auswertesystem 316 zu steuern.

## Patentansprüche

1. Verfahren zum Messen von Werkstückgeometrien mit einem Koordinatenmessgerät mit beweglichen Verfahrachsen und zumindest einem Bildverarbeitungssensor oder einem Röntgensensor zur Erfassung von Messpunkten auf den Werkstückoberfläcben, wobei jeweils derjenige Sensor entsprechend der zu lösenden Messaufgabe zum Messen der Werkstückgeometrien ausgewählt wird,
**dadurch gekennzeichnet,**
**dass** zur Qualitätsoptimierung von aufgenommenen Bildern bei dem Bildverarbeitungssensor oder dem Röntgensensor mehrere Bilder eines Objektbereichs mit jeweils unterschiedlichen Beleuchtungs- bzw. Strahlungsintensitäten aufgenommen und diese sodann zu einem Gesamtbild zusammengefügt werden, wobei jeweils aus jedem Einzelbild die Bildpunktamplituden herangezogen werden, die innerhalb eines gültig definierten Amplitudenbereichs liegen, wobei Amplitudenwerte, die auf Überstrahlung schließen lassen, unberücksichtigt bleiben.

2. Verfahren nach Anspruch 1, **dadurch gekennzeichnet,**
**dass** die Integrationszeit einer das Bild aufnehmenden Kamera verändert wird.

3. Verfahren nach Anspruch 1, **dadurch gekennzeichnet,**
**dass** die Integrationszeit der Kamera als der Bildverarbeitungs- bzw. Röntgensensor so lange verlängert wird, bis ein ausreichend gutes Bild gespeichert und weiterverarbeitet werden kann, wobei die Intensität der Bildpunkte des Bildes bis zu einem Soll-Wert vergrößert wird.

4. Verfahren nach einem der Ansprüche 1 bis 3,
**dadurch gekennzeichnet,**
**dass** zur Erzeugung eines optimalen Kontrasts für den Bildverarbeitungssensor nacheinander mehrere Bilder mit verschiedenen Beleuchtungsquellen aufgenommen, aus jedem Bild die Bereiche mit optimalem Kontrast entnommen und zu einem kontrastoptimierten Gesamtbild zusammengefügt werden.

5. Verfahren nach zumindest Anspruch 4,
dass verschiedene Bilder des gleichen Objektes bzw. Objektausschnittes durch Verwendung verschiedener Beleuchtungsrichtungen einer Dunkelfeldbeleuchtung und/oder verschiedener Beleuchtungswinkel einer Dunkelfeldbeleuchtung und/oder Einsatz einer Hellfeldbeleuchtung aufgenommen und die kontrast-optimalen Bereiche der Einzelbilder zu einem optimierten Gesamtbild zusammengefügt werden.

6. Verfahren nach zumindest einem der Ansprüche 1 bis 5,
**dadurch gekennzeichnet,**
**dass** für jedes Pixel des resultierenden Gesamtbildes bzw. für jeden Ort jedes resultierenden Pixels des Gesamtbildes dasjenige Pixel mit gleichem Ort aus den mit verschiedener Beleuchtung generierten Einzelbildern ausgewählt wird, welches optimalen Kontrast in seiner Umgebung aufweist.

7. Verfahren nach zumindest Anspruch 6,
**dadurch gekennzeichnet,**
**dass** die Bewertung des optimalen Kontrasts durch Bestimmung der Amplituden-Differenz zwischen den jeweils betrachteten Pixeln und den benachbarten Pixeln durchgeführt wird.

8. Verfahren nach zumindest Anspruch 1,
**dadurch gekennzeichnet,**
**dass** bei Vorhandensein mehrerer gültiger Bildpunktamplituden aus den normierten Bildpunktamplituden ein Mittelwert gebildet wird.

9. Verfahren nach zumindest einem der Ansprüche 1 und 8,
**dadurch gekennzeichnet,**
**dass** entsprechende Berechnungen in auf die benutzte Strahlungs- bzw. Beleuchtungsintensität normierten Amplitudenwerten berechnet werden.

## Claims

1. Method for measuring workpiece geometries using a coordinate measuring device with movable travel axes and with at least one image processing sensor or X-ray sensor for recording measurement points on the workpiece surfaces, where in each case the sensor appropriate for the measuring task to be performed is selected for measuring the workpiece geometries,
**wherein**
to optimize the quality of recorded images, several images of an object area are recorded with different lighting or exposure intensities in each case at the image processing sensor or at the X-ray sensor, and are then combined into an overall image, where from each individual image the image point amplitudes used are those which are within a validly defined amplitude range, with amplitude values indicating overexposure being left out of consideration.

2. Method according to claim 1,
**wherein**
the integration time of a camera recording the image is altered.

3. Method according to claim 1,
**wherein**
the integration time of the camera as the image processing sensor or X-ray sensor is extended until a sufficiently good image can be saved and further processed, the intensity of the image points of the image being increased up to a set value.

4. Method according to one of claims 1 to 3,
**wherein**
several images are consecutively recorded with different lighting sources to generate an optimum contrast for the image processing sensor, and the areas with optimum contrast are taken from each image and combined into an optimized-contrast overall image.

5. Method according to at least claim 4,
wherein different images of the same object or section of the object are recorded using different lighting directions of dark field lighting and/or different lighting angles of dark field lighting and/or using bright field lighting, and the optimum-contrast areas of the individual images are combined into an optimized overall image.

6. Method according to at least one of claims 1 to 5,
**wherein**
for each pixel of the resultant overall image or for each location of each resultant pixel of the overall image, the pixel with the same location which has optimum contrast in its surroundings is selected from the individual images generated with different lighting,

7. Method according to at least claim 6,
**wherein**
evaluation of the optimum contrast is conducted by determining the amplitude difference between the viewed pixels and the adjacent pixels.

8. Method according to at least claim 1,
**wherein**
a mean value is obtained from the standardized image point amplitudes if there are several valid image point amplitudes.

9. Method according to at least one of claims 1 and 8,
**wherein**
appropriate calculations are conducted on amplitude values standardized to the exposure intensity or lighting intensity used.

## Revendications

1. Procédé de mesure de géométries d'objets à l'aide d'un appareil de mesure de coordonnées avec des axes de translation mobiles et au moins un capteur de traitement d'image ou un capteur radiographique pour l'acquisition de points de mesure sur les surfaces d'objets, sachant que le capteur est sélectionné en fonction du problème de mesure à résoudre pour mesurer les géométries d'objets.
**caractérisé en ce**
**que** pour optimiser la qualité des images prises par le capteur de traitement d'image ou le capteur radiographique, plusieurs images d'une zone de l'objet sont prises avec différentes intensités d'éclairage ou de rayonnement, et que celles-ci sont assemblées pour former une image complète, sachant que pour chaque image individuelle sont utilisées les amplitudes respectives des pixels qui sont comprises dans une plage d'amplitude valablement définie, sachant que les valeurs d'amplitude qui laissent supposer une hyperluminosité ne sont pas prises en compte.

2. Procédé selon la revendication 1,
**caractérisé en ce**
**que** le temps d'intégration d'une caméra prenant l'image est modifié.

3. Procédé selon la revendication 1,
**caractérisé en ce**
**que** le temps d'intégration de la caméra comme capteur de traitement d'image ou capteur radiographique est prolongé jusqu'à ce qu'une image suffisamment bonne puisse être enregistrée et traitée, sachant que l'intensité des pixels de l'image est augmentée jusqu'à atteindre une valeur de consigne.

4. Procédé selon une des revendications 1 à 3,
**caractérisé en ce**
**que** pour créer un contraste optimal pour le capteur de traitement d'image, plusieurs images sont prises successivement avec différentes sources d'éclairage, que les zones présentant un contraste optimal sont extraites de chaque image et qu'elles sont assemblées pour former une image globale au contraste optimisé.

5. Procédé selon au moins la revendication 4,
**caractérisé en ce**
**que** différentes images du même objet ou de la même section d'objet sont prises en utilisant différentes directions d'éclairage d'un éclairage sur fond obscur et/ou différents angles d'éclairage d'un éclairage sur fond obscur et/ou en utilisant un éclairage sur fond clair et que les zones au contraste optimal des images individuelles sont assemblées pour former une image globale optimisée.

6. Procédé selon au moins une des revendications 1 à 5,
**caractérisé en ce**
**qu'**est sélectionné, pour chaque pixel de l'image globale résultante ou pour chaque emplacement de chaque pixel résultant de l'image globale, le pixel situé au même emplacement sur les images individuelles générées avec différents éclairages et qui présente un contraste optimal dans son entourage.

7. Procédé selon au moins la revendication 6,
**caractérisé en ce**
**que** l'évaluation du contraste optimal est réalisée en déterminant la différence d'amplitude entre les pixels considérés et les pixels voisins.

8. Procédé selon au moins la revendication 1,
**caractérisé en ce**
**que** s'il existe plusieurs amplitudes de pixels valables, une valeur moyenne est constituée à partir des amplitudes de pixels normalisées.

9. Procédé selon au moins une des revendications 1 et 8,
**caractérisé en ce**
**que** des calculs correspondants sont calculés dans les valeurs d'amplitude normalisées pour l'intensité de rayonnement ou d'éclairage utilisée.
